# EUROPÄISCHE PATENTSCHRIFT

(11) **EP 0 860 644 B1**
(45) Veröffentlichungstag und Bekanntmachung des Hinweises auf die Patenterteilung: **02.05.2001**
(21) Anmeldenummer: 98102114.0
(22) Anmeldetag: 06.02.1998
(51) Int. Cl.: F16L 55/132, G21C 13/067

(54) **Einrichtung zum Verschliessen einer in einen Behälter mündenden Rohrleitung**
Device for plugging a pipe opening into a container
Dispositif pour le tamponnage d'un conduit débouchant dans un réservoir

(30) Priorität: 19.02.1997 DE 19706553
(43) Veröffentlichungstag der Anmeldung: 26.08.1998
(73) Patentinhaber: SIEMENS AKTIENGESELLSCHAFT, 80333 München (DE)
(72) Erfinder: Stauner, Jakob, Dipl.-Ing. (FH), 90427 Nürnberg (DE)

(56) Entgegenhaltungen:
- DE-A- 3 534 579
- US-A- 4 393 899
- US-A- 5 033 511

## Beschreibung

Die Erfindung bezieht sich auf eine Einrichtung zum Verschließen einer in einen Behälter mündenden Rohrleitung, insbesondere zum Verschließen der Hauptkühlmittelleitung im Bereich des Stutzens eines Reaktordruckbehälters.

Bei Servicearbeiten in Anlagen der Kraftwerkstechnik oder der Verfahrenstechnik, bei denen unterschiedliche Anlagenteile mit Rohrleitungssystemen untereinander in Verbindung stehen, ist es für Wartungs- oder Reparaturarbeiten an diesen Anlagenteilen oder in den Rohrleitungen erforderlich, das betreffende Anlagenteil vor dem Beginn der Wartungs- oder Reparaturarbeiten zu entleeren und vom übrigen Teil der Anlage zu isolieren. Dies geschieht beispielsweise durch Ventile oder Klappen oder durch in die Rohrleitungen eingebrachte dehnbare Hohlkörper, die im aufgeblasenen Zustand diese Rohrleitungen verschließen.

Dieses Vorgehen ist beispielsweise notwendig bei Wartungs- oder Reparaturarbeiten im Primärkreis eines Druckwasserreaktors. Um die Hauptkühlmittelleitung ohne Absenken des Wasserspiegels im Reaktordruckbehälter entleeren zu können, muß in der Nähe der Mündung in den Reaktordruckbehälter ein Dichtstopfen eingesetzt werden, der verhindern soll, daß das im Reaktordruckbehälter befindliche Wasser abläuft. Hierzu ist aus der FR 2 425 589 bekannt, in der Hauptkühlmittelleitung eine "Dichtblase", d.h. einen elastischen dehnbaren Hohlkörper einzuführen, der mit Druckluft oder einer Flüssigkeit beaufschlagt wird, sich dabei ausdehnt und die Hauptkühlmittelleitung zum Reaktordruckbehälter dicht verschließt.

Durch den statischen Druck im gefüllten Reaktordruckbehälter wird die "Dichtblase" von einer Seite aus belastet. Sowohl die Befestigung der "Dichtblase", als auch ihr innerer Druck müssen dem gesamten statischen Druck entgegenwirken. Es besteht daher die Gefahr, daß durch eine Verschiebung oder einen zu geringen Innendruck der "Dichtblase" ein Versagen der Dichtwirkung eintritt, und daß der Reaktordruckbehälter sich über eine für Wartungsarbeiten geöffnete Hauptkühlmittelleitung entleert.

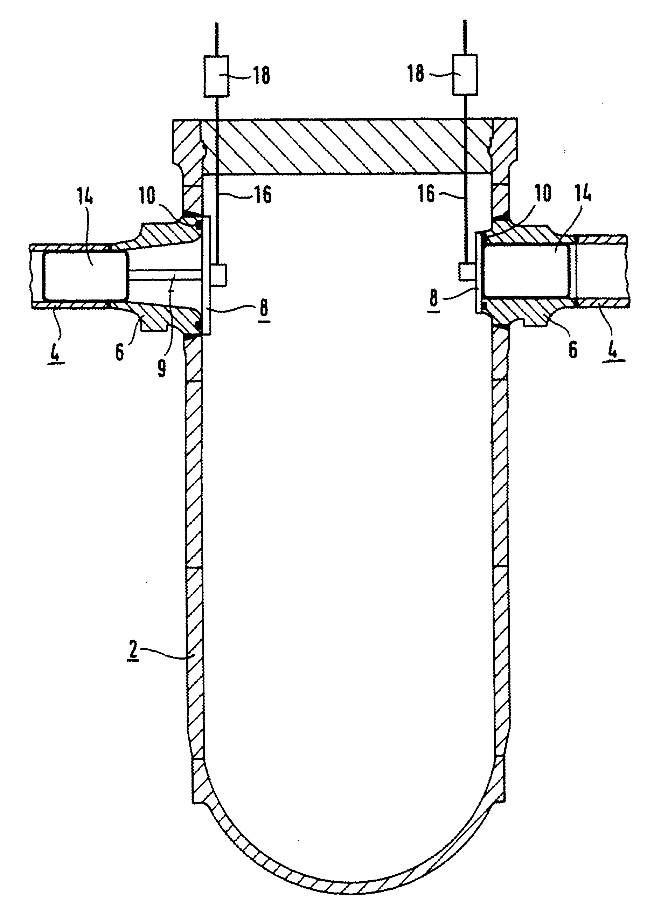

Die US-A-4 393 899 (Figur 1) offenbart eine topfartige Haltevorrichtung. Das Verschlußelement gemäß Figur 4 der US-A-5 033 511 befindet sich im Mündungsbereich der Rohrleitung.

Der Erfindung liegt die Aufgabe zugrunde, eine Einrichtung zum Verschließen einer in einen Behälter mündenden Rohrleitung anzugeben, bei der die Gefahr des Versagens auf einfache und kostengünstige Weise verhindert ist.

Die genannte Aufgabe wird erfindungsgemäß gelöst mit den Merkmalen des Patentanspruchs 1.

Bei der Einrichtung zum Verschließen einer in einen Behälter mündenden Rohrleitung gemäß der Erfindung wird ein elastischer Hohlkörper in die Rohrleitung eingebracht und dort aufgeblasen. Der elastische Hohlkörper ist an einer mechanischen Haltevorrichtung befestigt. Diese ist zur Sicherung des Hohlkörpers gegen axiale Verschiebung über eine Dichtung an die Innenwand des Behälters bzw. an die Stirnwand der Rohrleitung die Mündung der Rohrleitung überdeckend anlegbar. Die Stirnwand der Rohrleitung ist dabei ein Teil der Innenwand des Behälters. Durch diese Maßnahme ist sichergestellt, daß der elastische Hohlkörper durch den im Behälter herrschenden Druck nicht in die Rohrleitung hinein verschoben werden kann, was zu einem Verlust der Dichtwirkung führen könnte, und daß selbst bei einer Beschädigung des elastischen Hohlkörpers ein Verlust der Dichtwirkung nicht auftritt. In Richtung des Behälters kann der Hohlkörper ohnehin nicht verschoben werden, weil im Behälter stets ein höherer Druck herrscht als in der entleerten Rohrleitung. Weiterhin umfaßt die Haltevorrichtung eine Dichtscheibe.

In einer vorteilhaften Ausgestaltung der Erfindung nach Patentanspruch 2 wird der Innendruck des elastischen Hohlkörpers überwacht. Damit ist gewährleistet, daß der elastische Hohlkörper die Rohrleitung stets gut abdichtet und darüber hinaus nicht durch einen zu hohen Innendruck beschädigt werden kann.

In einer weiteren vorteilhaften Ausgestaltung der Erfindung nach Patentanspruch 3 ist der elastische Hohlkörper durch eine Stange mit der mechanischen Haltevorrichtung verbunden. Damit wird der Vorteil erzielt, daß der elastische Hohlkörper im inneren zylindrischen Teil der Rohrleitung statt in einem konischen Teil an der Mündung positionierbar ist, wodurch eine besonders gute Abdichtung gewährleistet ist. Der elastische Hohlkörper kann aber auch unmittelbar mit der mechanischen Haltevorrichtung verbunden sein.

Die Dichtung ist beispielsweise nach Patentanspruch 5 als Dichtring ausgebildet.

Zur weiteren Erläuterung der Einrichtung nach der Erfindung wird auf die Zeichnung verwiesen, in deren einziger Figur die Funktionsweise neuer Ausführungsbeispiele der Einrichtung gemäß der Erfindung schematisch veranschaulicht ist.

Gemäß der Figur ist an einem Behälter 2, im Ausführungsbeispiel ist dies der Reaktordruckbehälter eines Druckwasserreaktors, eine Rohrleitung 4, im Ausführungsbeispiel ist dies die Hauptkühlmittelleitung, angeschlossen. Die Rohrleitung 4 endet im Behälter 2 mit einem Stutzen 6. Im Stutzen 6 und/oder an einer anderen Position in der Rohrleitung 4 befindet sich ein elastischer Hohlkörper 14 zum Abdichten der Rohrleitung 4 gegenüber dem Inneren des Behälters 2.

Im Inneren des Behälters 2 im Bereich des Stutzens 6 befindet sich eine mechanische Haltevorrichtung 8 in der Form einer Dichtscheibe, die die Mündung des Stutzens 6 bzw. der Rohrleitung 4 überdeckt. Zwischen der Haltevorrichtung 8 und der Stirnfläche des Stutzens 6 ist eine Dichtung 10, z.B. ein Dichtring, gelagert, der die Mündung des Stutzens 6 umgibt und als Axialdichtung dient. Durch diese Axialdichtung wird eine zusätzliche Abdichtung der Rohrleitung 4 gewährleistet, da der Druck im Behälter 2 die Haltevorrichtung 8 gegen die Dichtung 10 drückt.

Im linken Ausführungsbeispiel ist an der mechanischen Haltevorrichtung 8 eine Stange 9 angeordnet, die in die Rohrleitung 4 hineinragt. An der Stange 9 ist der elastische Hohlkörper 14 befestigt. Dies ist von Vorteil, wenn der Stutzen 6 oder die Rohrleitung 4 im Bereich der Mündung Unebenheiten oder Konizitäten aufweisen, die ein sicheres und dichtes Anlegen des Hohlkörpers 14 erschweren. Im rechten Ausführungsbeispiel ist der elastische Hohlkörper 14 unmittelbar an der mechanischen Haltevorrichtung 8 angeordnet. Er kann dort z.B. verklebt sein.

An den elastischen Hohlkörper 14 ist eine druckführende Leitung 16 angeschlossen. Sie führt im linken Beispiel durch die Stange 9, die dazu eine hohle Stange ist. Durch eine Einrichtung 18 zur Steuerung und Überwachung des Drucks, die an der druckführenden Leitung 16 angebracht ist, wird der Innendruck des elastischen Hohlkörpers 14 gemessen, eingestellt und überwacht. Das druckführende Medium kann ein Gas, z.B. Luft, oder eine Flüssigkeit, z.B. Wasser, sein.

Wird der Innendruck des elastischen Hohlkörpers 14 über die druckführende Leitung 16 erhöht, so dehnt er sich aus, bzw. wird aufgeblasen und dichtet die Rohrleitung 4 ab. Durch die Stange 9 und die mechanische Haltevorrichtung 8 wird ein axiales Verrutschen des elastischen Hohlkörpers 14 verhindert. Gleichzeitig erfolgt eine redundante Abdichtung der Rohrleitung 4 gegenüber dem Behälter 2 durch die Dichtung 10, die zwischen der mechanischen Haltevorrichtung 8 und dem Stutzen 6 abdichtet. Sollte der elastische Hohlkörper 14 wider Erwarten doch einmal versagen, was unwahrscheinlich ist, z.B. durch mechanische Einwirkung, ist dennoch ein dichter Abschluß zwischen Behälter 2 und Rohrleitung 4 gewährleistet.

## Patentansprüche

1. Einrichtung zum Verschließen einer in einen Behälter (2), insbesondere einen Reaktordruckbehälter, mündenden Rohrleitung (4), mit
- einem elastischen Hohlkörper (14),
- einer als Dichtscheibe ausgebildeten mechanischen Haltevorrichtung (8), an der der elastische Hohlkörper (14) zur Sicherung gegen axiale Verschiebung befestigt ist, und,
- einer Axialdichtung (10),
wobei die Dichtscheibe und die Axialdichtung (10) derart ausgebildet sind, daß in einem den Behälter (2) verschließenden Zustand die Mündung der Rohrleitung (4) von der Dichtscheibe überdeckt ist, und daß in diesem Zustand die Axialdichtung (10) zwischen der Dichtscheibe einerseits und der Innenwand des Behälters (2) oder der Stirnwand der Rohrleitung (4) andererseits, und die Mündung eines Stutzens (6) der Rohrleitung (4) umgebend, zum Anliegen kommt.

2. Einrichtung nach Anspruch 1,
**dadurch gekennzeichnet**, daß eine Einrichtung (18) zur Steuerung und Überwachung des Innendrucks im elastischen Hohlkörper (14) mit diesem verbunden ist.

3. Einrichtung nach Anspruch 1 oder 2,
**dadurch gekennzeichnet**, daß der elastische Hohlkörper (14) durch eine Stange (9) oder unmittelbar mit der mechanischen Haltevorrichtung (8) verbunden ist.

4. Einrichtung nach einem der Ansprüche 1 bis 3,
**dadurch gekennzeichnet**, daß die Dichtung (10) ein Dichtring ist.

## Claims

1. Device for sealing a pipeline (4) that runs into a vessel (2), in particular a reactor pressure vessel, having
- an elastic hollow body (14),
- a mechanical holding device (8) which is formed as a sealing disc and to which the elastic hollow body (14) is fixed for the purpose of securing against axial displacement, and
- an axial seal (10),
with the sealing disc and the axial seal (10) being formed in such a way that in a state in which the vessel (2) is sealed, the opening to the pipeline (4) is covered by the sealing disc, and in that in this state the axial seal (10) comes to fit between the sealing disc, on the one hand, and the inner wall of the vessel (2) or the end wall of the pipeline (4), on the other hand, and so as to surround the opening of a connection piece (6) of the pipeline (4).

2. Device according to claim 1, characterised in that a device (18) for controlling and monitoring the internal pressure in the elastic hollow body (14) is connected to the latter.

3. Device according to claim 1 or 2, characterised in that the elastic hollow body (14) is connected to the mechanical holding device (8) by means of a rod (9) or is connected thereto directly.

4. Device according to one of claims 1 to 3, characterised in that the seal (10) is a sealing ring.

## Revendications

1. Dispositif pour boucher par un tampon un conduit (4) débouchant dans une cuve (2), notamment dans une cuve sous pression de réacteur, comportant
- un tampon (14) creux élastique,
- un dispositif (8)mécanique de maintien qui est réalisé en disque étanche et auquel le tampon (14) creux élastique est fixé pour empêcher tout déplacement axial, et
- une garniture (10) d'étanchéité axiale,
le disque étanche et la garniture (10) d'étanchéité axiale étant réalisés de telle manière que, en un état fermant la cuve (2), l'embouchure du conduit (4) est recouverte par le disque étanche et de telle manière que, en cet état, la garniture (10) d'étanchéité axiale s'applique entre le disque étanche d'une part et la paroi intérieure de la cuve (2) ou la paroi frontale du conduit (4) d'autre part et en entourant l'embouchure d'un raccord (6) du conduit (4).

2. Dispositif suivant la revendication 1, caractérisé en ce qu'un dispositif (18) de commande et de surveillance de la pression intérieure dans le tampon (14) creux élastique est relié à ce dernier.

3. Dispositif suivant la revendication 1 ou 2, caractérisé en ce que le tampon (14) creux élastique est relié par une tige (9) ou directement au dispositif (8) mécanique de maintien.

4. Dispositif suivant l'une des revendications 1 à 3, caractérisé en ce que la garniture (10) d'étanchéité est une bague d'étanchéité.
